# EUROPEAN PATENT SPECIFICATION

(11) **EP 2 244 391 B1**
(45) Date of publication and mention of the grant of the patent: **30.05.2012**
(21) Application number: 09290295.6
(22) Date of filing: 20.04.2009
(51) Int. Cl.: H04B 7/06

(54) **Method and equipment for transmitting radio signals**
Verfahren und Gerät zur Übertragung von Funksignalen
Procédé et équipement pour la transmission de signaux radio

(43) Date of publication of application: 27.10.2010
(73) Proprietor: Alcatel Lucent, 75007 Paris (FR)
(72) Inventor: Luc, Dartois, 78955 Carrieres sous Poissy (FR)
(74) Representative: Croonenbroek, Thomas Jakob

(56) References cited:
- EP-A- 1 191 707
- EP-A- 1 617 570
- WO-A-2008/033089
- THOMAS DERRYBERRY R ET AL: "Transmit Diversity in 3G CDMA Systems" IEEE COMMUNICATIONS MAGAZINE, IEEE SERVICE CENTER, PISCATAWAY, US, vol. 40, no. 4, 1 April 2002 (2002-04-01), pages 68-75, XP011092810 ISSN: 0163-6804
- SIEMENS AG: "Primary CPICH requirement and testing in case of TX diversity" 3GPP DRAFT; R4-030821, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Sophia Antipolis, France; 20030818, 20 August 2003 (2003-08-20), XP050172418

## Description

### BACKGROUND OF THE INVENTION

The present invention relates to the field of radio communication networks and more specifically to the transmission (Tx) diversity in such networks.

Transmission (Tx) diversity refers to the use of multiple radio antennas in signal transmission thus allowing a signal quality improvement and a data rate enhancement. Indeed, Tx diversity allows to distribute the power amplification of the signal among at least two separated transmission circuits.

Nevertheless, signals have to be designed according to a Tx diversity standard in order to be transmitted along the separated transmission circuits.

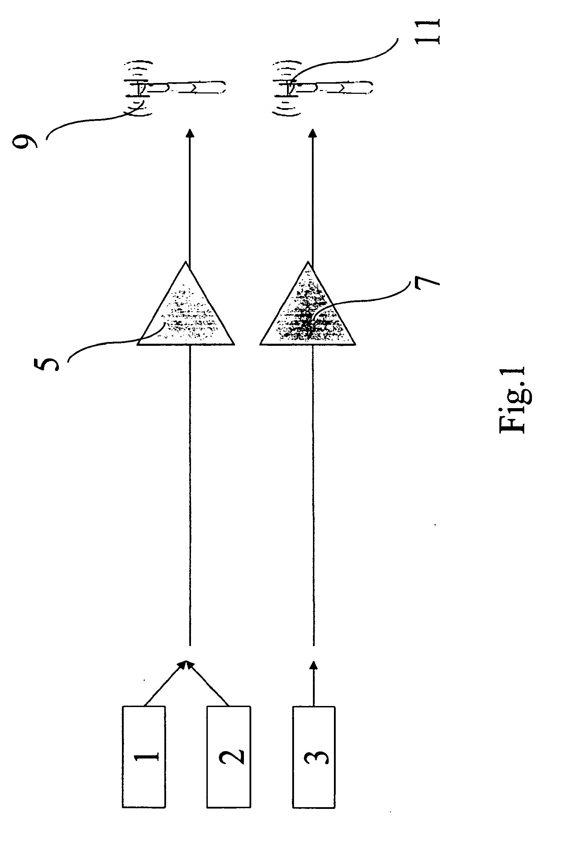

Fig.1 represents an example of base station with Tx diversity scheme comprising a first 5 and a second 7 power amplifiers connected respectively to a first 9 and a second 11 independent antennas. Two different types of signals, a LTE type (1 and 3) with Tx diversity and a WCDMA type 2 without Tx diversity, are transmitted. Both types requires 40W of amplification.

According to the Tx diversity standard, the LTE type signals are distributed equally (20W+20W) between the two power amplifiers (5 and 7). On the contrary, the WCDMA type signal which has no Tx diversity standard is amplified and transmitted along only one branch of the transmission circuit which leads to an assymetric amplification (60W (20+40) on a first amplifier 5 and 20W on the second amplifier 7). Such unbalanced amplification corresponds to a functioning of the hardware which is not optimal and therefore to a loss with respect to the available resources.

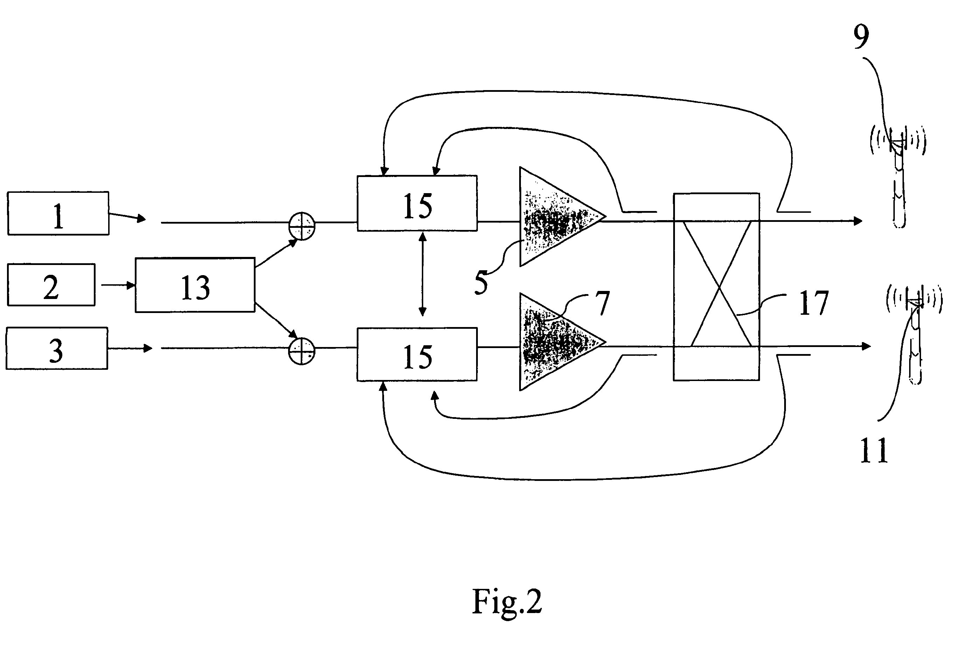

To overcome this issue, a solution of the state of the art corresponds to the use of a butler matrix 17 as described in Fig.2 wherein WCDMA signal 2 is splitted by an inverse butler matrix 13 and then added on one side to the LTE normal signal 1 and on the other side to the LTE diversity signal 3. Both signals are then transmitted to predistorsion and butler calibration units 15 before being amplified by the power amplifiers (5 and 7). In this case, the power amplification is equally distributed between both amplifiers (40W on each side). Finally the butler matrix 17 recombines both parts of the WCDMA signal 2 and transmits said WCDMA signal 2 with the LTE normal signal 1 to a first antenna 9, the LTE diversity signal 3 being transmitted to a second antenna 11. However, such solution has also some drawbacks since it requires elaborate electronic circuits and tedious calibration and tuning of the couplers. Moreover, the loss of power induced by the butler matrix equipment is generally significant. A method and arrangements for load balancing of power amplifiers with multiple antennas is also disclosed in WO 2008/033089.

### SUMMARY OF THE INVENTION

It is therefore an object of the present invention to overcome the above cited drawbacks of the state of the art and provide a method allowing to provide a balanced amplification of the signals in a Tx diversity transmission equipment, even with signals which are not designed according to a Tx diversity standard.

Thus, the present invention refers to a method for transmitting radio signals, from a base station comprising at least a pair of transmission branches to at least one terminal comprising at least one antenna, said pair of transmission branches comprising a first and a second power amplifier and a first and a second antenna wherein, in order to balance the amplification power of the at least two branches, a signal is splitted into at least two parts, said split being achieved according to the features of the terminal standard and such that the splitted signals have comparable average and peak power and are decorrelated from each other.

According to another embodiment, the split of the signals is a spectral division in the frequency domain.

According to an additional embodiment, the base station comprises two branches and transmits, on one side, signals having a diversity standard and, on the other side, non-diversity signals, said non-diversity signals being spectrally splitted in halves between both branches and gathered on both branches with diversity signals before power amplification.

According to a further embodiment, the diversity signals are Long term Evolution (LTE) signals and the non-diversity signals are Wideband Code Division Multiple Access (WCDMA) signals.

According to another embodiment, predistorsion and calibration is applied on the signal before power amplification.

According to an additional embodiment, the calibration is achieved in function of the standard reception features and principles of the least one terminal.

According to a further embodiment, the diversity signals are Wideband Code Division Multiple Access (WCDMA) signals and the non-diversity signals are Orthogonal Frequency Division Multiple Access (OFDMA) signals and a transformation to time domain is applied on the OFDMA signals before being gathered on both branches with diversity signals.

According to another embodiment, the base station comprises two branches and transmits three different non-diversity signals, one of said non-diversity signals being spectrally splitted in halves between both branches and gathered on both branches with the other non diversity signals before power amplification.

According to an additional embodiment, the splitted signals are Wideband Code Division Multiple Access (WCDMA) signals and the split is achieved such that the number of targeted users is equivalent for each part of the splitted signals.

According to another embodiment, the splitted signals are Wideband Code Division Multiple Access (WCDMA) signals and the signals arc splitted into subsets, the number of subsets being equal to the number of amplification branches, wherein targeted users are distributed among the subsets such that the subsets have equivalent power amplification.

The present invention also refers to a radio transmission equipment comprising at least a pair of transmission branches, said pair of transmission branches comprising a first and a second power amplifier and a first and a second antenna wherein said radio transmission equipment also comprises splitting means adapted to perform a division of a signal into at least two parts, said division being achieved according to the features of the terminal standard and such that the splitted signals have comparable average and peak power and are decorrelated from each other.

According to another embodiment, said splitting means adapted to perform the division of a signal into at least two parts are a spectral splitter.

According to a further embodiment, said radio transmission equipment comprises predistorsion and calibration means.

According to an additional embodiment, said radio transmission equipment comprises processing means adapted to transform splitted signals from the frequency domain to the time domain.

### BRIEF DESCRIPTION OF THE DRAWINGS

FIG.1 is a diagram representing an assymetric amplification in the case of a Tx diversity scheme;
FIG.2 is a diagram representing the use of a butler matrix in a Tx diversity circuit;
FIG.3 is a diagram representing the recombination of the signals at the receiver in a Tx diversity scheme;
FIG.4 is a diagram representing the signal spectrum repartition according to a first embodiment of the present invention;
FIG.5 is a diagram representing the equipment required to achieve a spectral split according to a first embodiment of the present invention;
FIG.6 is a diagram representing the signal spectrum repartition according to a second embodiment of the present invention;
FIG.7 is a diagram representing the signal spectrum repartition according to a third embodiment of the present invention;

### DETAILED DESCRIPTION OF THE INVENTION

As used herein, the term "Tx diversity" or "transmission diversity" refers to a radio signal transmission using multiple power amplifiers and radio antennas, the signal being splitted, before amplification and transmission, and recombined in the air at the reception location;

As used herein, the term "diversity signals" refers to signals being designed according to a standard allowing to separate a signal in different parts, said parts being transmitted through the different power amplifiers and radio antennas of the Tx diversity circuit.

As used herein, the term "non-diversity signals" refers to legacy signals being not specifically designed for Tx diversity.

As used herein, the term "LTE" refers to the acronym Long Term Evolution;

As used herein, the term "WCDMA" refers to the acronym Wideband Code Division Multiple Access;

As used herein, the term "OFDMA" refers to the acronym Orthogonal Frequency Division Multiple Access;

As used herein, the term "W" refers to the power unit Watt;

As used herein, the term "CPICH" refers to the acronym Common Pilot Channel;

As used herein, the term "transmission branch" refers to a part of an emitter being able to amplify and transmit a signal;

The present invention refers to a method for dividing or splitting non-diversity signals in order to allow the transmission of said signals with multiple antennas. In general, the number of antennas is equal to two in Tx diversity circuit but higher even numbers of antennas can be considered. The following description will be limited to embodiments having only a pair of antennas. However, the present invention may be applied to any kind of Tx diversity circuits.

The idea of the Tx diversity is to use multiple antennas to transmit signals in order to improve signal transmission. Such multiple transmission has to be "transparent" for the receiver or terminal. Indeed, in the case of Tx diversity, modifications are achieved at the transmitter side but the receiver may remain identical so that no difference should appear between the transmitted signals. To match such transmission requirements, an idea of the present invention is to split the signals such that the resulting signals are decorrelated from each other and have comparable average and peak power so as to avoid lossy combining and splitting means at the output of the different amplifiers. Different types of splitting may be applied in function of the type of signals and the receiver standard features.

### 1) Wideband Code Division Multiple Access (WCDMA) signals

a WCDMA signal is a sum of code division signals. Each targeted user or receiver has a given code and additional codes are used for broadcast channels. Said broadcast channels are transmitted to a whole network cell to be received by all the user equipments located in that cell. For example, the rake receiver may be configured based on said broadcast channels because the propagation effects are the same on the different types of codes.

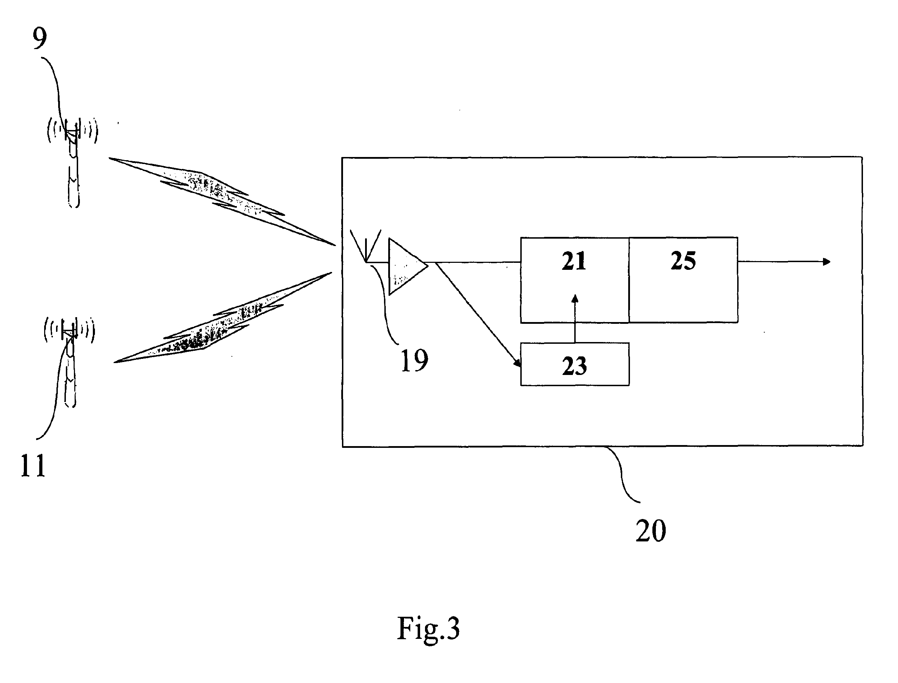

Besides, Fig.3 represents the signal recombination at the receiver 20. Signals originated from both antennas (9 and 11) are recombined at the receiver antenna 19. The rake receiver 21 allows to correct channel impairments occurring along the signal propagation through the air. To achieve this correction, the rake receiver 21 uses a common pilot channel (CPICH) unit 23 and a despreader 25 to determine a global propagation model and applies this model on the user codes allowing thus to correct gain and phase or delay defaults.

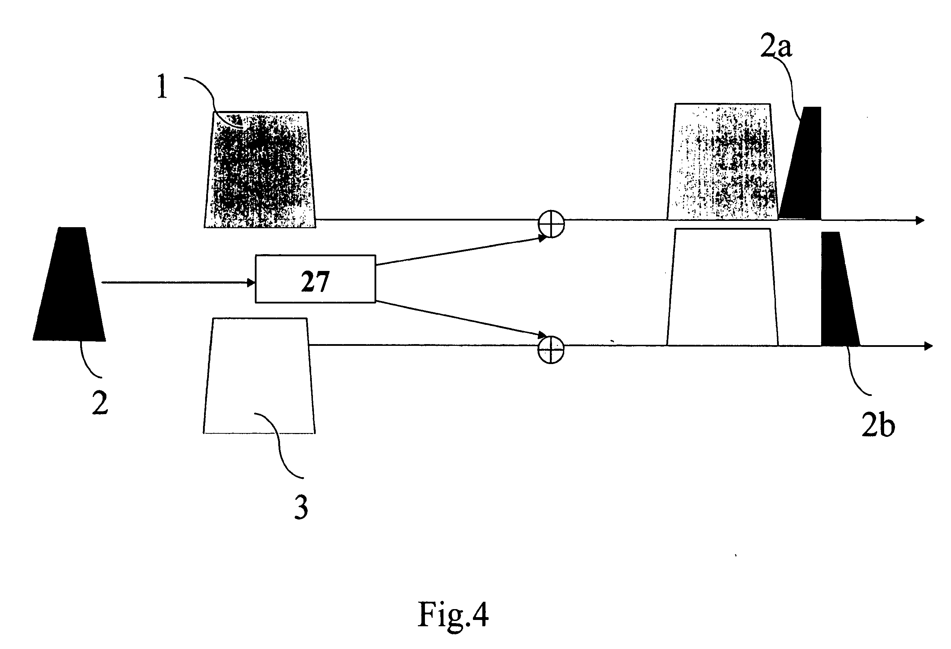

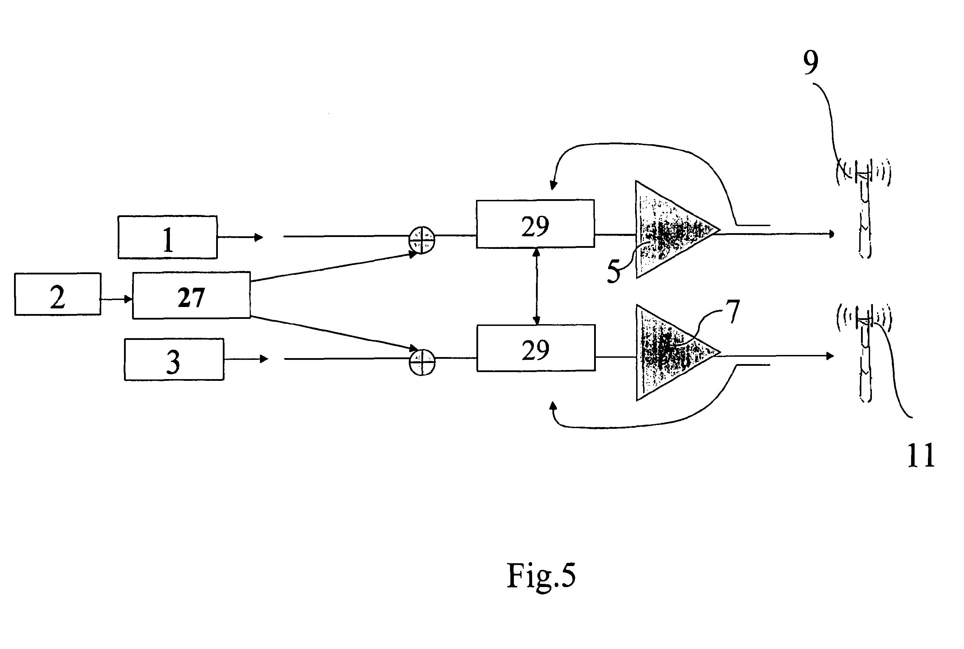

A first embodiment comprising the same signals as in Fig.1 (40W of LTE signals with diversity and 40W WCDMA signals without diversity) is presented in Fig.4 wherein the spectra of the signals are represented. In this case, the signal split of the WCDMA signal 2 is achieved in the frequency domain by a spectral splitter 27. The left part of the spectrum 2a being directed to a first branch of the Tx diversity circuit and the right part of the spectrum 2b being directed to a second branch of the Tx diversity circuit. If the signal spectrum belongs to a frame with a bandwidth ΔF centered on a frequency Fo, the left part of the spectrum 2a corresponds to the part of the spectrum being in the frequency band [Fo- (Δ/2);F₀] and the right part of the spectrum 2b corresponds to the part of the spectrum being in the frequency band [F₀;F₀+(ΔF/2)]. Thus, as opposed to the example described in Fig.1, the power amplification is equally distributed between both branches of the circuit (40W on each side) due to the fact that WCDMA signals have a flat average power density. Fig.5 shows the equipment necessary to achieve this solution. Predistorsion calibration units 29 are required before amplification but in this case, the tuning of the power amplifiers (5 and 7) and the predistorsion calibration is much easier than in the case of Butler matrix presented in Fig.2. Moreover, power amplification losses, previously mainly due to the Butler matrix, are therefore greatly reduced.

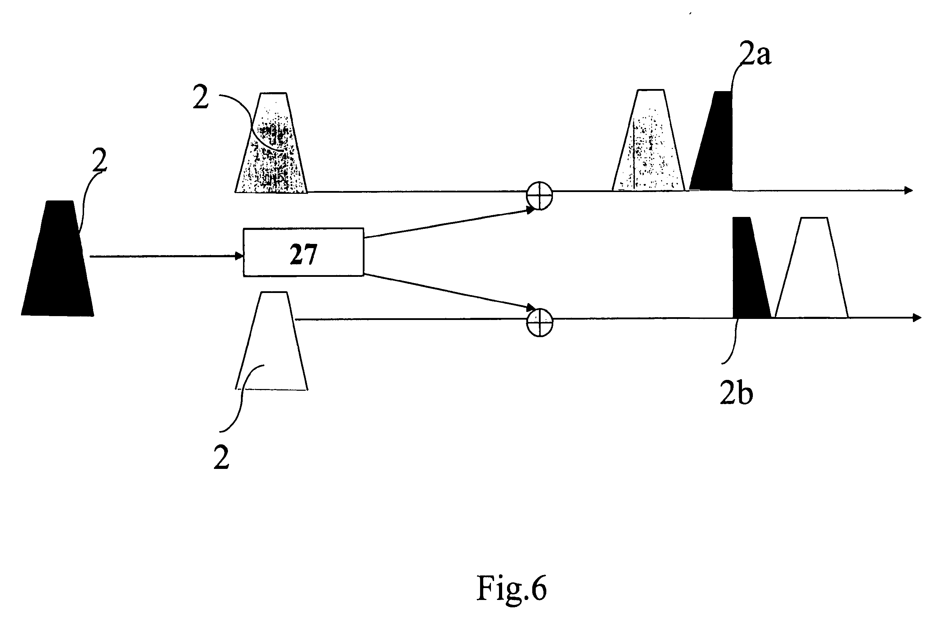

A second embodiment comprising three WCDMA signals 2 without Tx diversity is represented in Fig.6. In order to distribute equally the signals among the two branches of the Tx diversity circuit, one of the signal has to be splitted. Again, as in the previous embodiment, a spectral splitter 27 is used and the left part of the spectrum 2a is transmitted to a first branch while the right part 2b is transmitted to a second branch.

A third embodiment corresponding to a signal split based on the users wherein signals are splitted such that the signals corresponding to half of the users are transmitted to a first antenna and the signals corresponding to the other half of the users are transmitted to a second antenna. Besides, the distribution of the users may also be achieved such that the required transmission power be equivalent between the different transmission branches.

### 2) Orthogonal Frequency Division Multiple Access (OFDMA) signals

In the OFDMA modulation scheme, a subset of subcarriers is assigned to each user. Some subsets usually at the center of the spectrum are also assigned for broadcast channels that are sent to all the users. Each subset and even each subcarrier is orthogonal to the others and therefore decorrelated from the others. In the following embodiments, transmitted signals comprise a 40W OFDMA signal without diversity 4 and a WCDMA with diversity (20W normal signal 6 and 20W diversity signal 8).

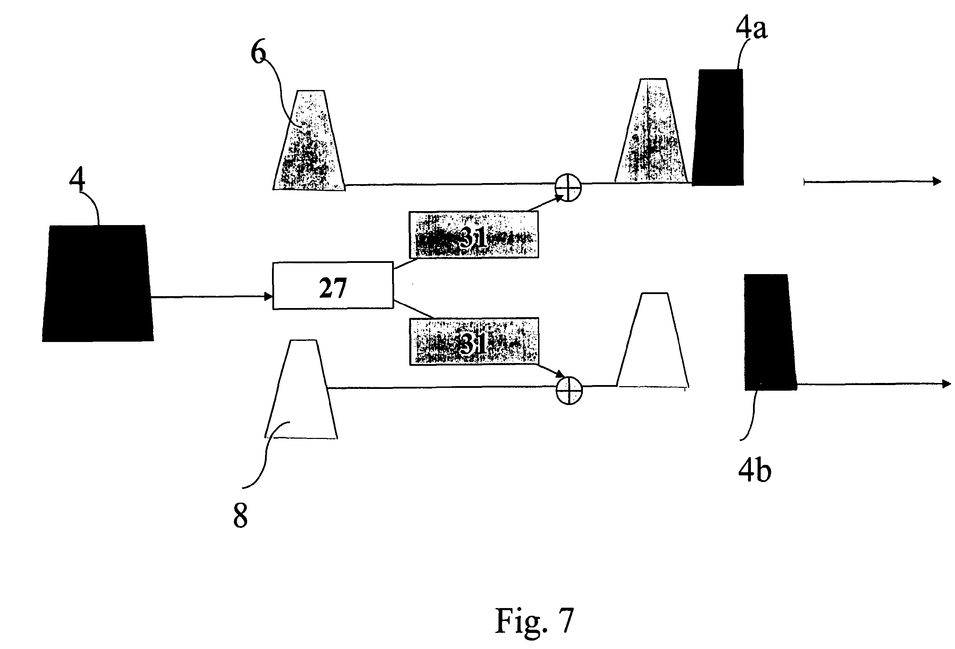

In this case, the splitting corresponds to a spectral split of the OFDMA signal 4 which is represented in Fig.7 and wherein the left part of the spectrum 4a is transmitted to a first branch and the right part 4b of the spectrum is transmitted to a second branch. This solution is represented in Fig.7. As OFDMA signals are built in the frequency domain, the spectral split is achieved at the spectral splitter 27 with no cost before the Inverse Fast Fourier Transform (IFFT) unit 31 that transfers the signals to the time domain in order to get time domain decorrelated symbols. Moreover, a cyclic prefix is applied on the signals. Said cyclic prefix eases the synchronization on OFDMA symbols at the reception of the signal in presence of non-ideal propagation channel while keeping symbols orthogonality. Frequently, this cyclic prefix is also filtered in order to have a sharper spectral rolloff while smoothing transitions between symbols.

Thus, the present invention allows to equally distribute non-diversity signals among the power amplifiers of a Tx diversity circuit without requesting complicated electronics and/or tedious tuning. Moreover, signal transmission quality and data rate are improved and remain compatible with legacy receivers. Besides, the different embodiments previously presented limit losses due to combining/coupling means after the power amplification of the Tx diversity circuit.

Moreover, in the case of WDCMA spectral split, a joint calibration in gain, phase and delay between both halves of signal in each transmission chain is necessary to limit impairment that contributes to the overall signal error vector magnitude (EVM) and orthogonality losses between transmitted codes.

Besides, residual impairments in this calibration are seen for example by the user equipments as part of the propagation effect that also affects orthogonality of the transmitted signals.

It has also to be noted that the calibration means may use the measurement chains already used for amplifiers digital predistorsion.

## Claims

1. Method for transmitting radio signals, from a base station comprising at least a pair of transmission branches to at least one terminal comprising an antenna (19), said pair of transmission branches comprising a first (5) and a second (7) power amplifier and a first (9) and a second (11) antenna **characterized in that**, in order to balance the amplification power of said at least two branches, said method comprises the step of:
splitting a non-diversity signal into two or a higher even number of parts, by dividing spectrally the signal in the frequency domain, according to the features of the terminal standard and such that the splitted parts of the non-diversity signal have average and peak power of similar value and are decorrelated from each other, said splitted parts of the non-diversity signal being transmitted and recombined at the antenna (19) of said at least one terminal.

2. Method for transmitting radio signals in accordance with claim 1 wherein the base station comprises two branches and transmits signals having a diversity standard and non-diversity signals, said non-diversity signals being spectrally splitted in halves between both branches and gathered on both branches with diversity signals before power amplification.

3. Method for transmitting radio signals in accordance with claim 2 wherein the diversity signals are Long Term Evolution "LTE" signals and the non-diversity signals are Wideband Code Division Multiple Access "WCDMA" signals.

4. Method for transmitting radio signals in accordance with claim 3 wherein predistorsion and calibration is applied on the signal before power amplification.

5. Method for transmitting radio signals in accordance with claim 4 wherein the calibration is achieved in function of the standard reception features and principles of the least one terminal.

6. Method for transmitting radio signals in accordance with claim 2 wherein the diversity signals are Wideband Code Division Multiple Access "WCDMA" signals and the non-diversity signals are Orthogonal Frequency Division Multiple Access "OFDMA" signals and wherein a transformation to time domain is applied on the OFDMA signals before being gathered on both branches with diversity signals.

7. Method for transmitting radio signals in accordance with claim 1 wherein the base station comprises two branches and transmits three different non-diversity signals, one of said non-diversity signals being spectrally splitted in halves between both branches and gathered on both branches with the other non diversity signals before power amplification.

8. Method for transmitting radio signals in accordance with claim 1 wherein the splitted signal is a Wideband Code Division Multiple Access "WCDMA"signal and wherein the split is achieved such that the number of targeted users is equivalent for each part of the splitted signal.

9. Method for transmitting radio signals in accordance with claim 1 wherein the splitted signals are Wideband Code Division Multiple Access "WCDMA" signals and wherein the signals are splitted into subsets, the number of subsets being equal to the number of amplification branches, wherein targeted users are distributed among the subsets such that the subsets have equivalent power amplification.

10. Radio transmission equipment comprising at least a pair of transmission branches, said pair of transmission branches comprising a first (5) and a second (7) power amplifier and a first (9) and a second (11) antenna **characterized in that** said radio transmission equipment also comprises splitting means (27) adapted to perform a division of a non-diversity signal into at least two parts, by dividing spectrally the non-diversity signal in the frequency domain, said division being achieved according to the features of a terminal standard and such that the splitted signals have average and peak power of similar value and are decorrelated from each other in order to be recombined at an antenna (19) of a terminal.

11. Radio transmission equipment in accordance with claim 10 wherein said splitting means (27) adapted to perform the division of the non-diversity signal into at least two parts are a spectral splitter.

12. Radio transmission equipment in accordance with claim 10 or 11 wherein it comprises predistorsion and calibration means.

13. Radio transmission equipment in accordance with claim 11 or 12 wherein it comprises processing means adapted to transform splitted signals from the frequency domain to the time domain.

## Patentansprüche

1. Verfahren zur Übertragung von Funksignalen von einer Basisstation mit mindestens einem Sendezweig-Paar an mindestens ein Endgerät mit einer Antenne (19), wobei das besagte Sendezweig-Paar einen ersten (5) und einen zweiten (7) Leistungsverstärker und eine erste (9) und eine zweite (11) Antenne umfasst, **dadurch gekennzeichnet, dass** das besagte Verfahren für das Ausgleichen der Verstärkungsleistung der besagten mindestens zwei Zweige die folgenden Schritte umfasst:
Aufspalten eines Nicht-Diversity-Signals in zwei oder eine größere geradzahlige Anzahl von Teilen durch spektrales Teilen des Signals im Frequenzbereich, gemäß den Eigenschaften des Standards des Endgeräts, derart, dass die aufgespalteten Teile des Nicht-Diversity-Signals eine mittlere Leistung und eine Spitzenleistung von ähnlichem Wert aufweisen und voneinander dekorreliert sind; wobei die besagten aufgespalteten Teile des Nicht-Diversity-Signals übertragen und an der Antenne (19) des besagten mindestens einen Endgeräts rekombiniert werden.

2. Verfahren zur Übertragung von Funksignalen nach Anspruch 1, wobei die Basisstation zwei Zweige aufweist und Signale mit einem Diversity-Standard und Nicht-Diversity-Signale überträgt, wobei die besagten Nicht-Diversity-Signale zwischen beiden Zweigen spektral in Hälften aufgeteilt und vor der Leistungsverstärkung auf beiden Zweigen mit Diversity-Signalen gesammelt werden.

3. Verfahren zur Übertragung von Funksignalen nach Anspruch 2, wobei die Diversity-Signale Long Term Evolution bzw. LTE-Signale und die Nicht-Diversity-Signale Breitband-Codemultiplexzugriff- bzw. WCDMA-Signale sind.

4. Verfahren zur Übertragung von Funksignalen nach Anspruch 3, wobei vor der Leistungsverstärkung eine Vorverzerrung und Kalibrierung auf das Signal angewendet wird.

5. Verfahren zur Übertragung von Funksignalen nach Anspruch 4, wobei die Kalibrierung in Abhängigkeit von den standardmäßigen Empfangseigenschaften und - prinzipien des besagten mindestens einen Endgeräts durchgeführt wird.

6. Verfahren zur Übertragung von Funksignalen nach Anspruch 2, wobei die Diversity-Signale Breitband-Codemultiplexzugriff- bzw. WCDMA-Signale und die Nicht-Diversity-Signale Orthogonal- Frequenzmultiplexzugriff- bzw. OFDMA-Signale sind, und wobei eine Umwandlung in den Zeitbereich auf die OFDMA-Signale angewendet wird, bevor diese auf beiden Zweigen mit Diversity-Signalen gesammelt werden.

7. Verfahren zur Übertragung von Funksignalen nach Anspruch 1, wobei die Basisstation zwei Zweige aufweist und drei verschiedene Nicht-Diversity-Signale überträgt, wobei eines der besagten Nicht-Diversity-Signale zwischen den beiden Zweigen spektral in zwei Hälften aufgespaltet und vor der Leistungsverstärkung auf beiden Zweigen mit den anderen Nicht-Diversity-Signalen gesammelt wird.

8. Verfahren zur Übertragung von Funksignalen nach Anspruch 1, wobei das aufgespaltete Signal ein Breitband-Codemultiplexzugriff- bzw. WCDMA-Signal ist, und wobei die Aufspaltung derart erfolgt, dass die Anzahl von Zielbenutzern für jeden Teil des aufgespalteten Signals gleichwertig ist.

9. Verfahren zur Übertragung von Funksignalen nach Anspruch 1, wobei die aufgespalteten Signale Breitband-Codemultiplexzugriff- bzw. WCDMA-Signale sind, und wobei die Signale in Teilsignale gespaltet werden, wobei die Anzahl der Teilsignale der Anzahl von Verstärkungszweigen entspricht, wobei die Zielbenutzer derart zwischen den Teilsignalen verteilt werden, dass die Teilsignale eine gleichwertige Leistungsverstärkung aufweisen.

10. Funkübertragungsvorrichtung mit mindestens einem Sendezweig-Paar, wobei das besagte Sendezweig-Paar einen ersten (5) und einen zweiten (7) Leistungsverstärker und eine erste (9) und eine zweite (11) Antenne umfasst, **dadurch gekennzeichnet, dass** die besagte Funkübertragungsvorrichtung ebenfalls Aufspaltmittel (27) umfasst, welche für die Durchführung des Spaltens eines Nicht-Diversity-Signals in mindestens zwei Teile durch spektrales Spalten des Nicht-Diversity-Signals im Frequenzbereich ausgelegt sind, wobei das besagte Spalten gemäß den Eigenschaften des Standards eines Endgeräts und derart erfolgt, dass die aufgespalteten Signale eine mittlere Leistung und eine Spitzenleistung ähnlichen Wertes aufweisen und voneinander dekorreliert sind, um an einer Antenne (19) des Endgeräts rekombiniert zu werden.

11. Funkübertragungsvorrichtung nach Anspruch 10, wobei die besagten Aufspaltmittel (27), welche für das Durchführen der Spaltung des Nicht-Diversity-Signals in mindestens zwei Teile ausgelegt sind, ein Spektralteiler sind.

12. Funkübertragungsvorrichtung nach Anspruch 10 oder 11, umfassend Vorverzerrungs- und Kalibrierungsmittel.

13. Funkübertragungsvorrichtung nach Anspruch 11 oder 12, umfassend Verarbeitungsmittel, welche für das Umwandeln des aufgespalteten Signals vom Frequenzbereich in den Zeitbereich ausgelegt sind.

## Revendications

1. Procédé d'émission de signaux hertziens depuis une station de base comprenant au moins une paire de branches d'émission vers au moins un terminal comprenant une antenne (19), ladite paire de branches d'émission comprenant un premier (5) et un deuxième (7) amplificateurs de puissance ainsi qu'une première (9) et une deuxième (11) antennes, **caractérisé en ce que** pour équilibrer la puissance d'amplification desdites au moins deux branches, ledit procédé comprend l'étape suivante :
séparation d'un signal sans diversité en deux ou en un nombre pair supérieur de parties en réalisant une division spectrale du signal dans le domaine de fréquence conformément aux caractéristiques de la norme du terminal et de telle sorte que les parties séparées du signal sans diversité présentent une puissance moyenne et de crête de valeurs similaires et sont décorrélées les unes des autres, lesdites parties séparées du signal sans diversité étant émises et recombinées au niveau de l'antenne (19) dudit au moins un terminal.

2. Procédé d'émission de signaux hertziens selon la revendication 1, selon lequel la station de base comprend deux branches et émet des signaux ayant une norme de diversité et des signaux sans diversité, lesdits signaux sans diversité étant séparés de manière spectrale en moitiés entre les deux branches et assemblés sur les deux branches avec les signaux en diversité avant l'amplification de puissance.

3. Procédé d'émission de signaux hertziens selon la revendication 2, selon lequel les signaux en diversité sont des signaux « LTE » à évolution à long terme et les signaux sans diversité sont des signaux « WCDMA » à accès multiple par division de code à bande élargie.

4. Procédé d'émission de signaux hertziens selon la revendication 3, selon lequel une prédistorsion et un étalonnage sont appliqués au signal avant l'amplification de puissance.

5. Procédé d'émission de signaux hertziens selon la revendication 4, selon lequel l'étalonnage est réalisé en fonction des caractéristiques de réception standard et des principes de l'au moins un terminal.

6. Procédé d'émission de signaux hertziens selon la revendication 2, selon lequel les signaux en diversité sont des signaux « WCDMA » à accès multiple par division de code à bande élargie et les signaux sans diversité sont des signaux à accès multiple par répartition orthogonale de la fréquence « OFDMA » et selon lequel une transformation vers le domaine temporel est appliquée sur les signaux OFDMA avant qu'ils soient assemblés sur les deux branches avec les signaux en diversité.

7. Procédé d'émission de signaux hertziens selon la revendication 1, selon lequel la station de base comprend deux branches et émet trois signaux sans diversité différents, l'un desdits signaux sans diversité étant séparé de manière spectrale en moitiés entre les deux branches et assemblé sur les deux branches avec les autres signaux sans diversité avant l'amplification de puissance.

8. Procédé d'émission de signaux hertziens selon la revendication 1, selon lequel le signal séparé est un signal « WCDMA » à accès multiple par division de code à bande élargie et selon lequel la séparation est réalisée de telle sorte que le nombre d'utilisateurs destinataires est équivalent pour chaque partie du signal séparé.

9. Procédé d'émission de signaux hertziens selon la revendication 1, selon lequel les signaux séparés sont des signaux « WCDMA » à accès multiple par division de code à bande élargie et selon lequel les signaux sont séparés en sous-ensembles, le nombre de sous-ensembles étant égal au nombre de branches d'amplification, et selon lequel les utilisateurs destinataires sont distribués entre les sous-ensembles de telle sorte que les sous-ensembles possèdent une amplification de puissance égale.

10. Équipement d'émission hertzien comprenant au moins une paire de branches d'émission, ladite paire de branches d'émission comprenant un premier (5) et un deuxième (7) amplificateurs de puissance ainsi qu'une première (9) et une deuxième (11) antennes, **caractérisé en ce que** ledit équipement d'émission hertzien comprend également des moyens de séparation (27) adaptés pour effectuer une division d'un signal sans diversité en au moins deux parties en effectuant une division spectrale du signal sans diversité dans le domaine de fréquence, ladite division étant réalisée conformément aux caractéristiques d'une norme de terminal et de telle sorte que les signaux séparés présentent une puissance moyenne et de crête de valeurs similaires et sont décorrélées les unes des autres afin d'être recombinés au niveau d'une antenne (19) d'un terminal.

11. Équipement d'émission hertzien selon la revendication 10, selon lequel lesdits moyens de séparation (27) adaptés pour effectuer la division du signal sans diversité en au moins deux parties sont un séparateur spectral.

12. Équipement d'émission hertzien selon la revendication 10 ou 11, selon lequel il comprend des moyens de prédistorsion et d'étalonnage.

13. Équipement d'émission hertzien selon la revendication 11 ou 12, selon lequel il comprend des moyens de traitement adaptés pour transformer les signaux séparés du domaine de fréquence vers le domaine temporel.
